# EUROPEAN PATENT SPECIFICATION

(11) **EP 0 892 695 B1**
(45) Date of publication and mention of the grant of the patent: **06.11.2002**
(21) Application number: 97916208.8
(22) Date of filing: 25.03.1997
(51) Int. Cl.: B24D 3/00, B24D 3/34, B24D 11/02

(54) **UV-POLYMERIZABLE FORMULATION**
UV-POLYMERISIERBARE ZUSAMMENSETZUNG
FORMULATION POLYMERISABLE PAR EXPOSITION A UN RAYONNEMENT UV

(30) Priority: 02.04.1996 US 626652
(43) Date of publication of application: 27.01.1999
(73) Proprietor: NORTON COMPANY, Worcester, Massachusetts 01615-0138 (US)
(72) Inventor: GAETA, Anthony, C., Lockport, NY 14094 (US); SWEI, Gwo, Shin, East Amherst, NY 14051 (US); BUTRYN, Edmund, F., Grimsby, Ontario L3M 3Z8 (CA)
(74) Representative: Richebourg, Michel François
(86) International application number: US9704799
(87) International publication number: WO97036713

(56) References cited:
- EP-A- 0 400 658
- EP-A- 0 552 698
- GB-A- 2 087 263
- PATENT ABSTRACTS OF JAPAN vol. 2, no. 8 (C-001), 20 January 1978 & JP 52 111935 A (TOYO INK MFG. CO. LTD), 20 September 1977, & DATABASE WPI Section Ch, Week 7744 Derwent Publications Ltd., London, GB; Class AG, AN 77-78379Y (25) & JP 52 111 935 A (TOYO INK MFG. CO.) , 20 September 1977
- PATENT ABSTRACTS OF JAPAN vol. 9, no. 145 (C-287), 20 June 1985 & JP 60 028403 A (SHOWA DENKO K.K.), 13 February 1985, & DATABASE WPI Section Ch, Week 8513 Derwent Publications Ltd., London, GB; Class AEG, AN 85-076936 (13) & JP 60 028 403 A (SHOWA DENKO K.K.) , 13 February 1985
- PATENT ABSTRACTS OF JAPAN vol. 18, no. 494 (P-1800), 14 September 1994 & JP 06 162565 A (HITACHI MAXELL LTD.), 10 June 1994, & DATABASE WPI Section Ch, Week 9428 Derwent Publications Ltd., London, GB; Class AGL, AN 94-227665 (28) & JP 06 162 565 A (HITACHI MAXELL K.K.) , 10 June 1994
- PATENT ABSTRACTS OF JAPAN vol. 10, no. 345 (C-386), 20 November 1986 & JP 61 148239 A (KYOWA GAS CHEM. IND. CO. LTD.), 5 July 1986, & DATABASE WPI Section Ch, Week 8633 Derwent Publications Ltd., London, GB; Class A, AN 86-216175 (33) & JP 61 148 239 A (KYOWA GAS CHEM. IND.) , 5 July 1986

## Description

### Background to the Invention

The present invention relates to the production of coated abrasives.

The use of UV-radiation curable formulations in the preparation of coated abrasives has been taught for many years. One of the earliest examples of this form of binder is described in US-A-4,773,920 which taught the use of binder grain mixtures curable by radiation-induced free radical polymerization. In US-A-5,014,468 the problems of UV radiation-induced polymerization polymerization are reviewed in the context of coated abrasives. It is pointed out that, in view of the limited penetration of the UV light into a formulation that comprises pigment and/or relatively coarse abrasive particles, UV radiation is somewhat limited in its utility to relatively thin layers.

The problems limiting the applicability of UV-radiation cured polymers in coated abrasives are experienced at their most intense in finishing formulations. These are formulations added to fabric materials to prepare them to receive maker coats in the preparation of coated abrasives. Typically they comprise polymers and fillers intended to saturate the backing and provide a surface to which the maker coat will bond tightly. Hence binders with a very significant amount of filler are typically used. The filler is a necessary component to reduce the cost, block the passages within the fabric to reduce its porosity and to modify the physical properties of the backing. In particular, the addition of filler improves the modulus of the cured formulation and at the same time reduces the amount of the (usually expensive) polymer-forming components that comprise the binder.

The presence of heavy filler loadings is very unfavorable to the use of UV-radiation curable binders. UV radiation cannot penetrate far enough because of the shadowing effect of the filler particles.

Similar problems arise when a maker or size coat comprising filler particles is used.

GB 2 087 263 discloses fill compositions comprising a filler and a radiation curable resin, the cure being performed by an electron beam, much more powerfull than UV radiation. Several fillers are mentioned, such as calcium carbonate, aluminum silicate and aluminate trihydrate. The said patent has retained such fillers in view of their ability to be usable in large amounts in the resin. The filler aluminum trihydrate is not taught as a filler which exhibits specific features.

EP 0 552 698 teaches maker and / or size coats which do not contain large amounts of fillers, while fill coats must contain large amounts of fillers so as to close up the porosity of the fabric.

The advantages of UV cure in terms of speed of cure and versatility of formulation properties are well-known. It would therefore be a distinct advantage if this shadowing effect or filler particles could be eliminated.

The present invention provides a way to secure the beneficial results of adding filler without impeding the rate of cure of a UV-curable binder significantly.

### General Description of the Invention

The present invention provides a coating composition comprising a UV-polymerizable formulation and from 25 to 50% by volume aluminium trihydrate as filler that is substantially transparent to UV light and a coated abrasive according to claim 4.

The UV light that is used to initiate polymerization has a wavelength of from about 250 to about 400nm. A filler is considered for the purposes of this Specification to be transparent to this light if, when a formulation containing a UV-polymerizable component and 25% by volume of the filler is exposed to UV light the depth of cure obtained is greater than 50%, and more preferably more than 75% of the depth attained when the formulation without the filler receives the same amount of radiation.

The depth of cure is measured by depositing the formulation on a belt surface passing under a UV source at a predetermined rate such the formulation receives the same amount of exposure. The result is the formation of a thin crust on the surface of the formulation. The thickness of this crust is an excellent measure of the relative depth of penetration of the UV radiation with various loading levels and types of filler.

The most frequently used fillers are calcium carbonate and silica and these are found to have a quite low transparency to UV light. Consequently the use of these fillers severely restricts the thickness of layers that can be cured. The present invention follows from the discovery that certain known filler materials have an unexpected superiority to the others when used with UV-curable formulations. Not only do they perform very well in improving the modulus of the cured formulation, but surprisingly, because they are UV-transparent, they permit the cure of much greater thicknesses than is possible if alternative fillers are used.

### Detailed Description of the Invention

The UV-curable component of the formulations of the invention include any of those taught in the art as being useful for the production of coated abrasives including acrylated epoxy resins, urethane acrylates, acrylated epoxy-novolacs, unsaturated polyesters, polyvinyl ethers and the like. The preferred binders of the invention comprise acrylated epoxy resins and urethane acrylates.

The particle size of the UV-transparent filler is preferably from about 1 to about 60µ, and more preferably from about 1 to about 20µ and more preferably still from about 1 to 10µ. The most preferred hydrated alumina for use in the present process is aluminum trihydrate with a weight average particle size of from about 1 to about 7µ.

The volume of filler that may be present in the compositions of the invention can be from 25 to about 50% by volume. Modulus improves up to the maximum packing fraction for the particular filler. This is generally dependent on the particle size and shape. Because the UV-polymerizable component has the primary function of providing a bonding layer, it is possible to approach the maximum packing fraction without significantly impairing the important physical characteristics of the cured formulation. Hence amounts of filler in the upper reaches of the above range are often preferred, for example from about 30 to 40 volume percent.

### DRAWINGS

Figure 1 is a chart showing the depth of cure obtained using various fillers in various proportions when incorporated into a UV-curable formulation.

Figures 2 and 3 show, respectively, the same depth of cure charts with 100 and 150 feet/minute (30.8 and 46.2 meters/minute respectively) rates of passage beneath the UV source. The legend on the chart appearing as Figure 1 applies also to Figures 2 and 3.

Figure 4 shows the increase in Knoop hardness of various formulations comprising increasing amounts of filler in the same binder. Again the legend from Figure 1 applies to this chart also.

Figure 5 shows the depth of cure plotted against the volume percentage of ATH in a commercial epoxyacrylate oligomer/monomer blend, at various line speeds.

### Description of the Preferred Embodiments

The invention is now described with reference to the data presented in the Drawings. These data are intended as illustrations of the invention and are not tobe taken a implying any limitations on the necessary scope of the invention.

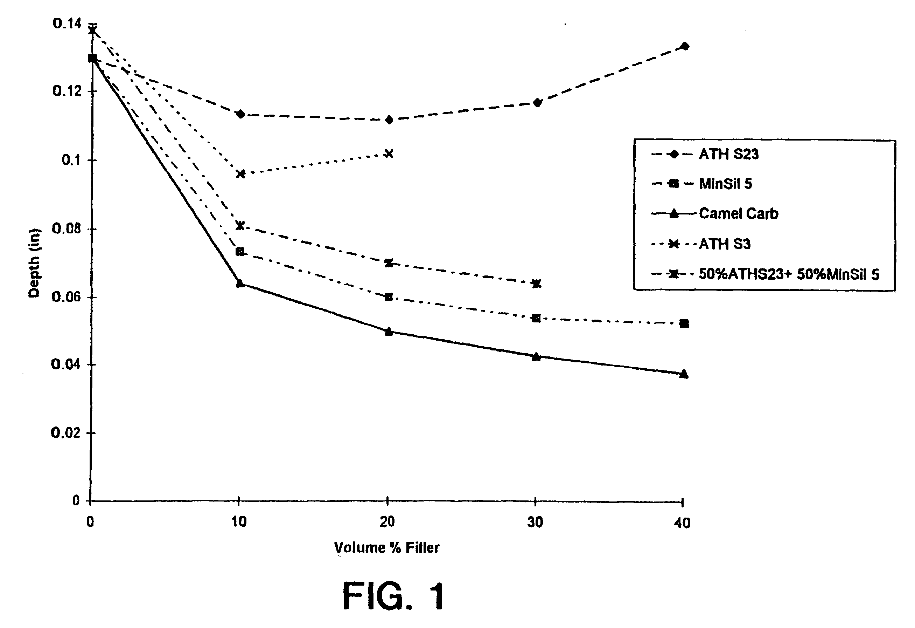

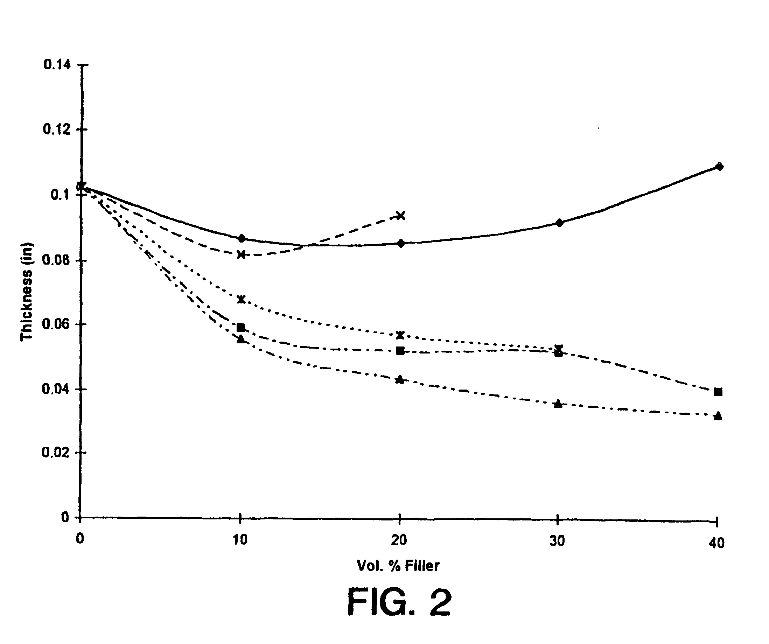

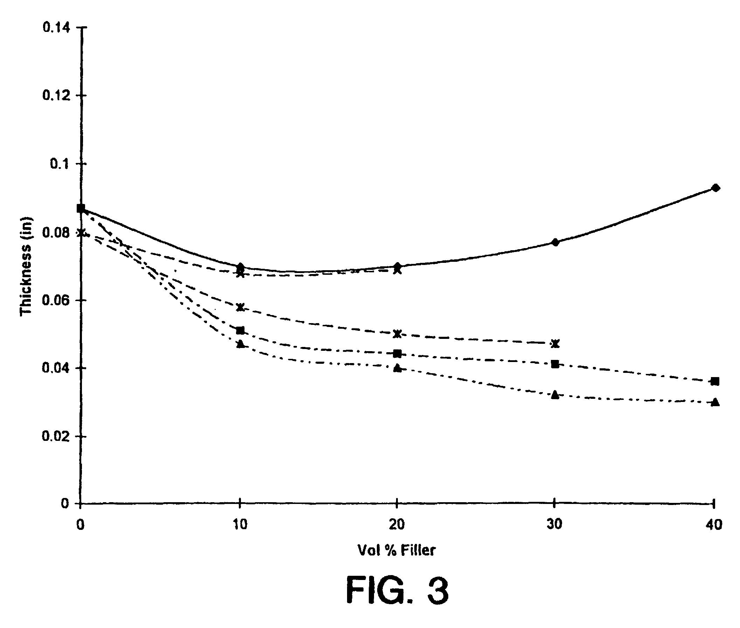

Figures 1 to 3 show clearly that, with conventional fillers such as calcium carbonate or silica, the depth of cure continues to decline with increasing amounts of filler. However with alumina hydrates, after an initial decline, the cure depth actually begins to increase with increasing concentration of filler. In these experiments the binder comprised an epoxy-acrylate(70%)/N-vinyl pyrrolidone(30%) mixture.

The formulations were passed beneath a UV source at a linear speed of 50 feet/minute, (15.4 meters/min). The boehmite experiment operated at a slower speed which accounts for the greater initial cure depth, (at zero concentration).

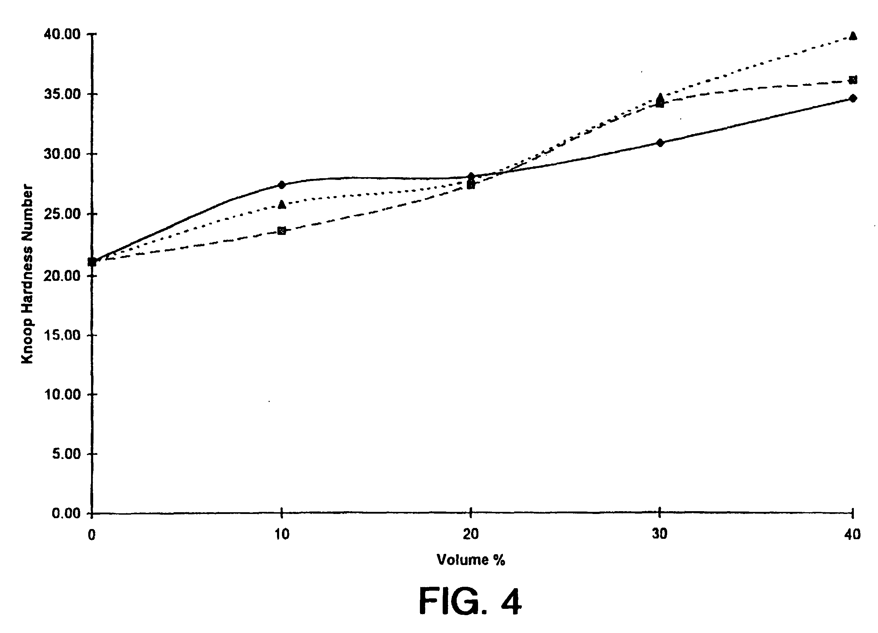

Figure 4 shows that the various fillers produce very similar levels of improvement in the hardness of the formulation when cured.

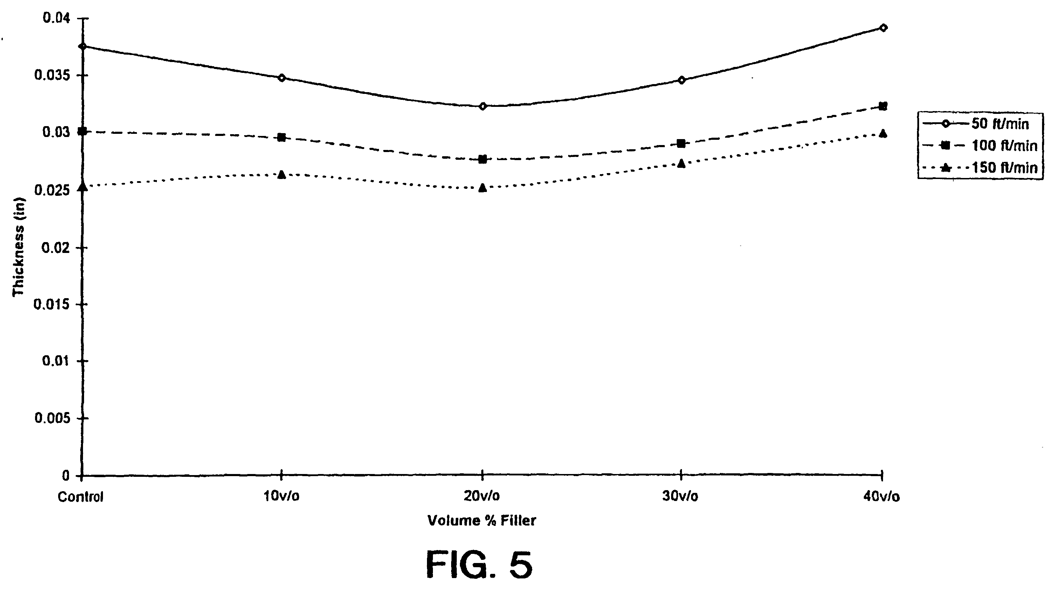

Figure 5 As might be anticipated, this drawing shows that the depth of cure decreases with increasing line speed which translates to shorter exposure time to the UV radiation. However, unexpectedly, the effect of the presence of the filler is markedly less when higher line speeds are used. It is also somewhat surprising that, at all speeds, volume proportions of filler above about 30% actually increase the depth of cure.

In Figures 1-4 the characteristics of five different formulations are described. These differ only in the nature of the filler and the different fillers are identified as follows:
**ATH S23**...aluminum trihydrate with a weight average particle size of 7.5µ.
**ATH S3**...aluminum trihydrate with a weight average particle size of 1µ available from Alcoa Industrial Chemicals.
**MinSil 5**...an amorphous fused silica with a weight average particle size of 7µ, available from Minco Inc.
**Camel Carb**...a calcium carbonate with a weight average particle size of 7.5µ, available from Global Stone PenRoc Inc.
**Boehmite**...an alpha alumina monohydrate available from Condea under the trade name Disperal.
**50%ATH-S23 + 50% MinSil 5**...As the name implies this is a mixture of equal volumes of the indicated components.

As indicated above, the products evaluated in Figure 5 used the preferred aluminum trihydrate with a different binder from that used in the other formulations evaluated.

Consideration of the data in Tables 1 to 3 clearly shows that the depth to which the UV radiation is able to penetrate (and thus lead to cure) is significantly greater with the hydrated aluminas than with the more conventional fillers. Since this improvement can be obtained with no significant sacrifice in the physical properties of the resulting cured material, (from Figure 4), it is clear that the use of UV-transparent fillers such as aluminum trihydrate is a very desirable expedient.

## Claims

1. A coating composition comprising a UV-polymerizable formulation and a filler that is substantially transparent to UV light, in which the filler is aluminum trihydrate, and in which the amount of the said aluminium trihydrate is from 25 to 50% by volume of the composition.

2. A coating composition according to Claim 1 in which the amount of the said aluminium trihydrate is from 30 to 40% by volume of the composition.

3. A coating composition according to Claim 1 in which the UV-polymerizable formulation comprises an epoxyacrylate.

4. A coated abrasive comprising a layer formed from a coating composition according to Claim 1.

## Patentansprüche

1. Beschichtungszusammensetzung umfassend eine UV-polymerisierbare Formulierung und einen Füllstoff, der für UV-Licht im wesentlichen durchlässig ist, wobei der Füllstoff Aluminiumtrihydrat ist, und wobei die Menge des Aluminiumtrihydrats 25 bis 50 Volumenprozent der Zusammensetzung beträgt.

2. Beschichtungszusammensetzung nach Anspruch 1, wobei die Menge des Aluminiumtrihydrats 30 bis 40 Volumenprozent der Zusammensetzung beträgt.

3. Beschichtungszusammensetzung nach Anspruch 1, wobei die UV-polymerisierbare Formulierung Epoxyacrylat umfasst.

4. Beschichtetes Schleifmittel umfassend eine Schicht gebildet aus einer Beschichtungszusammensetzung gemäß Anspruch 1.

## Revendications

1. Composition d'enrobage comprenant une formulation polymérisable par UV et une charge qui est sensiblement transparente au rayonnement UV, dans laquelle la charge est du trihydrate d'aluminium, et dans laquelle la quantité de dit trihydrate d'aluminium est comprise entre 25 et 50 % en volume de la composition.

2. Composition d'enrobage selon la revendication 1, dans laquelle la quantité de dit trihydrate d'aluminium est comprise entre 30 et 40 % en volume de la composition.

3. Composition d'enrobage selon la revendication 1, dans laquelle la formulation polymérisable par UV comprend un acrylate d'époxy.

4. Abrasif enrobé comprenant une couche formée à partir d'une composition d'enrobage selon la revendication 1.
